# EUROPÄISCHE PATENTSCHRIFT

(11) **EP 0 393 544 B1**
(45) Veröffentlichungstag und Bekanntmachung des Hinweises auf die Patenterteilung: **07.09.1994**
(21) Anmeldenummer: 90107146.4
(22) Anmeldetag: 14.04.1990
(51) Int. Cl.: C08G 69/28

(54) **Verfahren zur kontinuierlichen Herstellung von Nylon 4,6**
Process for continuous preparation of nylon 4,6
Procédé de préparation en continu de nylon 4,6

(30) Priorität: 19.04.1989 DE 3912770
(43) Veröffentlichungstag der Anmeldung: 24.10.1990
(73) Patentinhaber: BASF Aktiengesellschaft, 67063 Ludwigshafen (DE)
(72) Erfinder: Pipper, Gunter, D-6702 Bad Duerkheim (DE); Koch, Eckhard Michael, Dr., D-6701 Fussgoenheim (DE)

(56) Entgegenhaltungen:
- EP-A- 129 195
- EP-A- 129 196
- EP-A- 0 160 337
- EP-A- 0 210 511

## Beschreibung

Aus der EP-A-210 511 ist ein Verfahren bekannt, bei dem man eine wäßrige Lösung eines Salzes von 1,4-Diaminobutan und Adipinsäure in einer rohrförmigen Reaktionszone mit einer Verweilzeit bis zu 30 min bei einer Temperatur von 280 bis 320°C unter erhöhtem Druck kondensiert und nach Entspannen ein festes Vorpolymerisat erhält. Ferner ist aus der EP-A-160 337 bekannt, daß man ein Salz aus 1,4-Diaminobutan und Adipinsäure bei einer Temperatur von 210°C unter erhöhtem Druck mit einer Verweilzeit von 55 min vorkondensiert und das so erhaltene Vorpolymerisat in schmelzflüssigem Zustand bei einer Temperatur über 280°C mit einer Verweilzeit von ca. 15 min durch einen schmelzflüssigen Zustand durch ein Rohr leitet. Diese Verfahren haben den Nachteil, daß bei der Kondensation in der Schmelze leicht Verfärbungen auftreten und abgespaltenes 1,4-Diaminobutan verloren geht.

Es war deshalb die technische Aufgabe gestellt, ein Verfahren zur Herstellung von Tetramethylenadipamid, bei dem man eine Schädigung des Polymeren in der Schmelze vermeidet und Verluste an 1,4-Diaminobutan sowie die Bildung von Pyrrolidin vermindert, zur Verfügung zu stellen.

Diese Aufgabe wird gelöst in einem kontinuierlichen Verfahren zur Herstellung von Polytetramethylenadipamid, bei dem man eine wäßrige Lösung eines Salzes von 1,4-Diaminobutan und Adipinsäure unter einem Druck von 1 bis 10 bar unter Bildung eines Praepolymeren und einer Dampfphase auf eine Temperatur von 270 bis 330°C erhitzt und Dampf und Polymeres trennt, dadurch gekennzeichnet, daß man
a) die wäßrige Lösung von 1,4-Diaminobutan und Adipinsäure in einer Verdampferzone unter einem Überdruck von 1 bis 10 bar unter gleichzeitiger Verdampfung von Wasser innerhalb einer Verweilzeit von höchstens 120 sec unter Bildung einer Dampfphase und eines geschmolzenen Präpolymeren auf eine Temperatur von 270 bis 330°C erhitzt,
b) das Präpolymere und die Dampfphase unter Durchmischung innerhalb einer Verweilzeit von 70 bis 120 sec durch eine unmittelbar anschließende Stoffaustauschzone, die mit Einbauten versehen ist, unter einem Druck von 1 bis 10 bar und einer Temperatur von 270 bis 330°C leitet und ein geschmolzenes Polymeres und eine Dampfphase erhält,
c) in einer Trennzone die Dampfphase vom Polymeren trennt und das Polymere als granulierfähige Schmelze austrägt mit der Maßgabe, daß die Verweilzeit in den Stufen a), b) und c) insgesamt weniger als 5 min beträgt, und
d) aus der in der Stufe c) anfallenden Dampfphase durch Destillation Pyrrolidin abtrennt und 1,4-Diaminobutan in die Verdampferstufe a) zurückführt.

Das neue Verfahren hat den Vorteil, daß die Schädigung des Polymerisats wesentlich vermindert wird. Weiter hat das neue Verfahren den Vorteil, daß die Bildung von Pyrrolidin wesentlich vermindert wird und zudem 1,4-Diaminobutan vollständig zurückgewonnen und in das Verfahren zurückgeführt wird.

Erfindungsgemäß geht man von einer wäßrigen Salzlösung von 1,4-Diaminobutan und Adipinsäure aus. Die verwendete Lösung hat in der Regel bei 20°C einen pH-Wert von 7,8 bis 7,9. Vorteilhaft geht man von einer 40 bis 65 gew.-%igen Lösung des Salzes mit einer Temperatur von 80 bis 100°C aus.

Erfindungsgemäß leitet man in der Stufe a) die wäßrige Salzlösung kontinuierlich in eine Verdampferzone. Dort wird die wäßrige Salzlösung unter gleichzeitiger Verdampfung von Wasser und Bildung eines Präpolymeren unter einem Überdruck von 1 bis 10 bar auf eine Temperatur von 270 bis 330°C erhitzt. Vorteilhaft wendet man einen Überdruck von 7 bis 9 bar an und erhitzt auf eine Temperatur von 300 bis 310°C. Hierbei hält man eine Verweilzeit von höchstens 120 sec, insbesondere 70 bis 100 sec ein. Man erhält ein Gemisch aus einer Dampfphase und geschmolzenem Präpolymeren. Vorteilhaft hat das Präpolymere einen Umsetzungsgrad > 93 %, insbesondere 94 bis 96 %.

Die Verdampferzone ist vorteilhaft rohrförmig, insbesondere als Röhrenbündel ausgebildet. Besonders bewährt haben sich Rohre oder Röhrenbündel, in denen der Querschnitt periodisch wiederkehrend, zylinderisch und spaltförmig ausgebildet ist. Eine andere vorteilhafte Ausführungsform der Verdampferzone ist die Verwendung von Rohren oder Röhrenbündeln, bei denen die einzelnen Röhren mit Einbauten versehen sind, um eine große Oberfläche zu schaffen. Dies wird beispielsweise erreicht durch Bestücken mit Füllkörpern wie Raschigringen, Metallringen oder insbesondere Füllkörpern aus Drahtnetz.

Das Präpolymere und die Dampfphase, die im wesentlichen aus Wasserdampf und geringen Mengen an 1,4-Diaminobutan und Pyrrolidin besteht, wird unter Durchmischung innerhalb einer Verweilzeit von 70 bis 120 sec durch eine unmittelbar an die Stufe a) anschließende Stoffaustauschzone b), die mit Einbauten versehen ist, unter einem Druck von 1 bis 10 bar und einer Temperatur von 270 bis 330°C geleitet und ein geschmolzenes Polymeres und eine Dampfphase erhalten.

Vorteilhaft hält man in der Stoffaustauschzone die in der Stufe a) angewandten Druck- und Temperaturbedingungen ein. Die Verweilzeit in der Stoffaustauschzone beträgt vorteilhaft 70 bis 100 sek. Zweckmäßig ist die Stoffaustauschzone wie die Verdampferzone als Röhrenbündel ausgebildet. Die verwendeten Einbauten, z.B. Füllkörpern wie Raschigringen, Metallringe oder insbesondere Füllkörper aus Drahtnetz, bewirken eine große Oberfläche z.B. von 0,5 bis 2 m²/l. Hierdurch werden die Phasen, d.h. Präpolymeres und Dampf innig in Berührung gebracht. Dies bewirkt, daß die Menge des mit Wasserdampf freigesetzten Diamins erheblich vermindert wird.

Das aus der Stoffaustauschzone b) austretende zweiphasige Gemisch aus Dampf und Polymerisat, wird in einer Trennzone c) getrennt. Die Trennung erfolgt in der Regel von selbst aufgrund der physikalischen Unterschiede, wobei sich im unteren Teil der Trennzone das Polymerisat ansammelt und als granulierfähiges Polymerisat ausgetragen wird. Die freiwerdenden Brüden werden ebenfalls ausgetragen und bestehen im wesentlichen aus Wasserdampf mit geringen Mengen an Diaminen und Pyrrolidin.

Die Verweilzeit des schmelzflüssigen Polymeren in der Stufe c) beträgt vorteilhaft weniger als 60 sek, insbesondere 30 bis 45 sek. Es ist ein wesentliches Merkmal der Erfindung, daß in den Stufen a), b) und c) die Gesamtverweilzeit des Polymeren im schmelzflüssigen Zustand weniger als 5 min. z.B. 2,5 bis 4 min beträgt. Das erhaltene Polymere hat in der Regel einen Aminoendgruppengehalt von 150 bis 400, insbesondere von 150 bis 300 mäq/kg und eine relative Viskosität von 1,50 bis 1,55.

Aus der in Stufe c) anfallende Dampfphase wird in Stufe d) durch Destillation, Pyrrolidin abgetrennt und 1,4-Diaminobutan in die Stufe a) zurückgeführt. Vorteilhaft führt man die Destillation in einer Kolonne mit 5 bis 15 theoretischen Böden unter erhöhtem Druck z.B. unter dem Druck bei dem die Dampfphase anfällt, durch. Pyrrolidin wird am Kopf der Kolonne abgetrennt und als Sumpf eine wäßrige Lösung von 1,4-Diaminobutan erhalten.

Zur Verstärkung des Trenneffektes führt man vorteilhaft am Kopf der Kolonne Wasser zu, z.B. 0,15 bis 0,4 kg Wasser je kg Dampf. Es hat sich ferner als vorteilhaft erwiesen, der rezyklisierten Menge an 1,4-Diaminobutan gerade so viel an reinem 1,4-Diaminobutan hinzuzufügen, die der ausgetragenen Pyrrolidinmenge entspricht, zuzüglich einer Menge an 1,4-Diaminobutan, die es ermöglicht, im ausgetragenen Polymeren einen Aminoendgruppengehalt von 150 bis 400 mäq je kg, vorteilhaft 250 bis 300 mäq je kg zu erreichen.

Das Polymerisat wird vorteilhaft in fester Phase mit Inertgasen wie Stickstoff, Wasserdampf oder überhitztem Wasserdampf als Wärmeträger, z.B. bei einer Temperatur von 220 bis 270°C bis zur gewünschten Endviskosität, insbesondere im Gegenstrom z.B. mit einer Verweilzeit von 10 bis 40 Stunden weiter kondensiert. Um eine hohe Raumzeitausbeute und ein hohes Molekulargewicht zu erreichen, verwendet man für die Festphasenkondensation vorteilhaft ein Polymerisat mit einem Aminoendgruppengehalt von 150 bis 400, insbesondere 250 bis 300 mäq je kg und einer relativen Viskosität von 1,50 bis 1,55. Das Endprodukt wird anschließend mit den üblichen Zusatzstoffen wie Glasfasern, mineralische Füllstoffe, Stabisatoren, Gleitmittel, Flammschutzmittel extrudiert. Vorteilhaft setzt man bereits dem aus der Stufe c) ausgetragenen Polymerisat Zusatzstoffe in der Schmelze zu und kondensiert das Polymerisat anschließend in fester Phase weiter bis zur gewünschten Endviskosität.

Polytetramethylenadipamid, das nach dem Verfahren der Erfindung erhältlich ist, eignet sich zur Herstellung von Formkörpern durch Spritzgießen oder Extrusion, ferner zur Herstellung von Fäden und Fasern.

Das Verfahren nach der Erfindung sei an folgendem Beispiel veranschaulicht.

### Beispiel

Aus äquimolaren Mengen 1,4-Diaminobutan und Adipinsäure wird bei 94°C eine 60 gew.-%ige wäßrige Salzlösung mit einem pH-Wert von 7,8 hergestellt und diese mit einer Geschwindigkeit entsprechend einer Polyamidmenge von 5 kg je Stunde mittels einer Dosierpumpe in ein vertikales 3 m langes Verdampferrohr dosiert. Der Verdampfer hat einen Inhalt von 180 ml und besteht aus periodisch alternierend zylindrischen und spaltförmigen Abschnitten. Der Wärmertauscherfläche beträgt ca. 1400 cm². Das Rohr wird mit einem flüssigen Wärmeträger als Heizmedium mit hoher Umwälzung beheizt.

Die Verweilzeit im Verdampfer beträgt ca. 100 sec, die Temperatur 308°C und der Druck 8,0 bar. Das aus dem Verdampfer austretende Gemisch aus geschmolzenem Präpolymer und Dampf hat eine Temperatur von 305°C und wird unmittelbar in eine Stoffaustauschzone geleitet, die mit Füllkörpern bestückt ist und eine Oberfläche von 1 m²/l hat. In der Stoffaustauschzone hält man die gleiche Temperatur und den gleichen Druck wie im Verdampfer ein.

Hierbei erfolgt ein inniger Austausch zwischen aminhaltiger Gasphase und kondensierendem Präpolymeren. Die Verweilzeit in dieser Zone beträgt ca. 95 sec. Man erhält als Austrag ein Gemisch aus geschmolzenem Polymerisat und Dampf, das in einem Abscheidegefäß in eine Dampfphase und Polymerisatphase getrennt wird. Letztere wird sofort ausgetragen. Die Verweilzeit des Polymerisats im schmelzflüssigen Zustand im Abscheidegefäß beträgt ca. 45 sec. Die Gesamtverweilzeit in schmelzflüssigem Zustand in der Verdampferzone, Stoffaustauschzone und im Trenngefäß beträgt ca. 4 min.

Das Polymerisat hat eine relative Viskosität von 1,55, einen Aminoendgruppengehalt von 290 mäq je kg und einen Gehalt an Carboxylendgruppen von 122 mäq je kg. Der Gehalt an Pyrrolidinendgruppen beträgt 0,1 mmol pro g Polymerisat. Das erhaltene Polymerisat ist weiß.

Die anfallenden Brüden bestehen aus Wasserdampf 0,9 Gew.-% Pyrrolidin und ca. 8,0 Gew.-% 1,4-Diaminobutan und werden mit einer Temperatur von 303°C und 8 bar in eine Kolonne mit 10 theoretischen Böden geleitet und aufgetrennt. Im Kopf der Kolonne werden ca. 900 ml pro Stunde Wasser zur Verstärkung des Trenneffekts aufgegeben. Im Kopf der Kolonne wird eine Temperatur von 175°C eingehalten. Die kondensierten Brüden haben einen Gehalt von 0,85 Gew.-% Pyrrolidin und < 0,05 Gew.-% 1,4-Diaminobutan. Im Sumpf der Kolonne erhält man eine wäßrige Lösung von 1,4-Diaminobutan, die mit 170 g pro Stunde einer 50 gew.-%igen wäßrigen 1,4-Diaminobutan-Lösung ergänzt und dem Verdampfer zugeführt wird.

### Nachkondensation

Das erhaltene granulierte Polymerisat wird im Gegenstrom mit überhitztem Wasserdampf bei einer Temperatur von 250°C und einer Verweilzeit von 27 Stunden bei einem Gewichtsverhältnis von Polymerisat : Wasserdampf von 2 : 1 in fester Phase kondensiert. Man erhält ein weißes Polymerisat mit einer relativen Viskosität von 4,0 mit einem Aminoendgruppengehalt von 39 bis 41 mäq je kg und einem Gehalt an Carboxylendgruppen von 8 mäq je kg.

## Patentansprüche

1. Verfahren zur kontinuierlichen Herstellung von Polytetramethylenadipamid, bei dem man eine wäßrige Lösung eines Salzes aus 1,4-Diaminobutan und Adipinsäure unter einem Druck von 1 bis 10 bar auf eine Temperatur von 270 bis 330°C unter Bildung eines Präpolymeren und einer Dampfphase erhitzt und Dampfphase und Polymeres trennt, dadurch gekennzeichnet, daß man
a) die wäßrige Lösung des Salzes aus 1,4-Diaminobutan und Adipinsäure in einer Verdampferzone unter einem überdruck von 1 bis 10 bar unter gleichzeitiger Verdampfung von Wasser innerhalb einer Verweilzeit von höchstens 120 sec unter Bildung einer Dampfphase und eines geschmolzenen Präpolymeren auf eine Temperatur von 270 bis 330°C erhitzt,
b) das Präpolymere und die Dampfphase unter Durchmischung innerhalb einer Verweilzeit von 70 bis 120 sec durch eine unmittelbar anschließende Stoffaustauschzone, die mit Einbauten versehen ist, unter einem Druck von 1 bis 10 bar und einer Temperatur von 270 bis 330°C leitet und ein geschmolzenes Polymeres und eine Dampfphase erhält,
c) in einer Trennzone die Dampfphase vom Polymeren trennt und das Polymere als granulierfähige Schmelze austrägt mit der Maßgabe, daß die Verweilzeit der Schmelze in den Stufen a), b) und c) insgesamt weniger als 5 min beträgt, und
d) aus der in Stufe c) anfallenden Dampfphase durch Destillation Pyrrolidin abtrennt und 1,4-Diamonobutan in die Verdampferstufe a) zurückführt.

2. Verfahren nach Anspruch 1, dadurch gekennzeichnet, daß man in der Stufe a) einen Umsetzungsgrad von über 93 % einhält.

3. Verfahren nach den Ansprüchen 1 und 2, dadurch gekennzeichnet, daß man in der Stufe a) eine Temperatur von 300 bis 310°C und einen Druck von 7 bis 9 bar einhält.

4. Verfahren nach den Ansprüchen 1 bis 3, dadurch gekennzeichnet, daß man in der Stufe a) eine Verweilzeit von 70 bis 100 sec einhält.

5. Verfahren nach den Ansprüchen 1 bis 4, dadurch gekennzeichnet, daß man in der Stufe b) eine Verweilzeit von 70 bis 100 sec einhält.

6. Verfahren nach den Ansprüchen 1 bis 5, dadurch gekennzeichnet, daß man in der Stufe b) eine Temperatur von 300 bis 310°C und einen Druck von 7 bis 9 bar einhält.

7. Verfahren nach den Ansprüchen 1 bis 6, dadurch gekennzeichnet, daß man in der Stufe c) eine Verweilzeit von weniger als 60 sec einhält.

8. Verfahren nach den Ansprüchen 1 bis 7, dadurch gekennzeichnet, daß man in der aus der Stufe c) ausgetragenen Schmelze einen Aminoendgruppengehalt von 150 bis 400 mäq je kg und eine relative Viskosität von 1,50 bis 1,55 einhält.

9. Verfahren nach den Ansprüchen 1 bis 8, dadurch gekennzeichnet, daß man das aus Stufe c) erhaltene Polymerisat in fester Phase mit überhitztem Wasserdampf bei einer Temperatur von 220 bis 270°C weiterkondensiert und hochpolymeres Polytetramethylenadipamid erhält.

10. Verfahren nach den Ansprüchen 1 bis 9, dadurch gekennzeichnet, daß man dem aus der Stufe c) ausgetragenen Polymerisat Zusatzstoffe zusetzt.

## Claims

1. A process for the continuous preparation of polytetramethyleneadipamide, in which an aqueous solution of a salt of 1,4-diaminobutane and adipic acid is heated under from 1 to 10 bar to 270-330°C with formation of a prepolymer and of a vapor phase and the vapor phase and the prepolymer are separated, wherein
a) the aqueous solution of the salt of 1,4-diaminobutane and adipic acid is heated in an evaporator zone under a gage pressure of from 1 to 10 bar with simultaneous evaporation of water in the course of a residence time of not more than 120 sec with formation of a vapor phase and of a molten prepolymer to 270-330°C,
b) the prepolymer and the vapor phase are passed, with thorough mixing, in the course of a residence time of from 70 to 120 sec, through an immediately adjacent mass transfer zone which is provided with baffles, under from 1 to 10 bar and at from 270 to 330°C, and a molten polymer and a vapor phase are obtained,
c) the vapor phase is separated from the polymer in a separation zone and the polymer is discharged as a melt capable of being granulated, with the proviso that the residence time of the melt in the stages a), b) and c) is less than 5 minutes in total and
d) pyrrolidine is separated off by distillation from the vapor phase obtained in stage c) and 1,4-diaminobutane is recycled to the evaporator stage a).

2. A process as claimed in claim 1, wherein a conversion of more than 93% is maintained in stage a).

3. A process as claimed in claims 1 and 2, wherein from 300 to 310°C and from 7 to 9 bar are maintained in stage a).

4. A process as claimed in any of claims 1 to 3, wherein a residence time of from 70 to 100 sec is maintained in stage a).

5. A process as claimed in any of claims 1 to 4, wherein a residence time of from 70 to 100 sec is maintained in stage b).

6. A process as claimed in any of claims 1 to 5, wherein from 300 to 310°C and from 7 to 9 bar are maintained in stage b).

7. A process as claimed in any of claims 1 to 6, wherein a residence time of less than 60 sec is maintained in stage c).

8. A process as claimed in any of claims 1 to 7, wherein a terminal amino group content of from 150 to 400 meq per kg and a relative viscosity of from 1.50 to 1.55 are maintained in the melt discharged from stage c).

9. A process as claimed in any of claims 1 to 8, wherein the polymer obtained from stage c) is subjected to solid-phase postcondensation with superheated steam at from 220 to 270°C, and highly polymeric tetrahydromethyleneadipamide is obtained.

10. A process as claimed in any of claims 1 to 9, wherein additives are added to the polymer discharged from stage c).

## Revendications

1. Procédé de préparation en continu de polytétraméthylène adipamide, dans lequel on chauffe à une température comprise entre 270 et 330°C une solution aqueuse constituée d'un sel de 1,4-diaminobutane et d'acide adipique sous une pression comprise entre 1 et 10 bar, en formant un prépolymère et une phase vapeur, et l'on sépare la phase vapeur et la polymère, caractérise en ce que
a) l'on chauffe à une température comprise entre 270 et 330°C la solution aqueuse du sel de 1,4-diaminobutane et d'acide adipique dans une zone d'évaporateur sous une surpression comprise entre 1 et 10 bar, en évaporant simultanément de l'eau en une durée de séjour maximale de 120 s, et en formant une phase vapeur et un prépolymère fondu,
b) on introduit le prépolymère et la phase vapeur en mélange intime, en une durée de séjour de 70 à 120 s, à travers une zone d'échange de matières immédiatement consécutive, qui est garnie de pièces encastrées, sous une pression comprise entre 1 et 10 bar et à une température comprise entre 270 et 330°C, et l'on obtient un polymère fondu et une phase vapeur,
c) on sépare la phase vapeur du polymère dans une zone de séparation et l'on extrait le polymère sous forme de masse fondue apte à être transformée en granulés, à condition que la durée de séjour de la masse fondue dans les étapes a), b) et c) soit au total inférieure à 5 mn, et
d) on sépare par distillation la pyrrolidine de la phase vapeur produite dans l'étape c) et l'on recycle le 1-4-diaminobutane dans l'étape d'évaporateur a).

2. Procédé selon la revendication 1, caractérisé en ce que l'on maintient dans l'étape a) un taux de conversion supérieur à 93%.

3. Procédé selon la revendication 1 ou 2, caractérisé en ce que l'on maintient dans l'étape a) une température de 300 à 310°C et une pression de 7 à 9 bar.

4. Procédé selon l'une quelconque des revendications 1 à 3, caractérisé en ce que l'on maintient dans l'étape a) une durée de séjour de 70 à 100 s.

5. Procédé selon l'une quelconque des revendications 1 a 4, caractérisé en ce que l'on maintient dans l'étape b) une durée de séjour de 70 à 100 s.

6. Procédé selon l'une quelconque des revendications 1 a 5, caractérisé en ce que l'on maintient dans l'étape b) une température de 300 à 310°C et une pression de 7 à 9 bar.

7. Procédé selon l'une quelconque des revendications 1 à 6, caractérisé en ce que l'on maintient dans l'étape c) une durée de séjour inférieure à 60 s.

8. Procédé selon l'une quelconque des revendications 1 à 7, caractérisé en ce que l'on maintient dans la masse fondue extraite dans l'étape c) une teneur en groupes amino terminaux de 150 à 400 meq par kg et une viscosité relative de 1,50 à 1,55.

9. Procédé selon l'une quelconque des revendications 1 à 8, caractérisé en ce que l'on effectue une condensation supplémentaire du polymère obtenu a l'étape c), en phase solide avec de la vapeur d'eau surchauffée à une température de 220 à 270°C, et l'on obtient du haut polymère de polytétraméthylène, adipamide.

10. Procédé selon l'une quelconque des revendications 1 à 9, caractérisé en ce que l'on ajoute des additifs au polymère extrait dans l'étape c).
